# EUROPEAN PATENT APPLICATION

(11) **EP 2 008 871 A1**
(43) Date of publication of application: **31.12.2008**
(21) Application number: 08104498.4
(22) Date of filing: 20.06.2008
(51) Int. Cl.: B60R 5/04

(54) **System for lifting a luggage shelf for a vehicle, and vehicle provided with such system**

(30) Priority: 25.06.2007 IT TO20070454
(71) Applicant: SAN VALERIANO S.p.A., 10060 Virle Piemonte (Torino) (IT)
(72) Inventor: Roux, Fabio, 10100 Torino (IT); Strignano, Andrea, 10100 Torino (IT); Torti, Luca, 10045 Piossasco (Torino) (IT)
(74) Representative: Robba, Pierpaolo

(57) **Abstract**

The system for lifting the displaceable luggage shelf (1) of a vehicle, comprises a) a displaceable luggage shelf (1) provided with two engagement pins or protrusions (11); b) two adjustment guides (4).

The first and second section of the level change guide (7, 9) of each guide (4) intersect the fore/aft guide section (5), forming a closed path along which the engagement pins or protrusions (11) can move, engaging the displaceable luggage shelf (1) with the adjustment guides (4). The shelf (1) can be fixed to or removed from the vehicle through the opening (13). Two no return systems (15, 17) guide each engagement pin or protrusion (11) along a fixed path during the displacements for inserting, removing, lowering and raising the plan (1) in the guides (4). Such system is easy and little tiring for manual use.

## Description

### Field of the invention

The present invention relates to the field of motor vehicle components, and in particular the components of the inner luggage- and passenger compartment.

### Background art

It is currently known providing some cars with an inner luggage compartment with a displaceable luggage shelf, generally arranged near the part of the bodywork forming the fixed floor of the inner luggage compartment. Over the time several mechanisms and systems have been developed, for allowing the displaceable luggage shelf be reversibly positioned at various heights.

An object of the present invention is providing an alternative to the known mechanisms and systems, in order to allow the displaceable luggage shelf be reversibly positioned at various heights.

### Summary of the invention

In a first aspect of the present invention, this object is achieved with a system for lifting a displaceable luggage shelf for a vehicle, having the features according to claim 1.

In a particular embodiment of such lifting system, the adjustment guide is provided with an insertion opening through which the engagement pin or protrusion can pass, so as to engage or be removed from the adjustment guide.

In a particular embodiment, such lifting system comprises a no return system arranged for allowing the engagement pin or protrusion to slide in a direction along one out of the fore/aft guide section, and the first and second section of the level change guide, preventing it from sliding in the opposite direction.

In a particular embodiment, such no return system is arranged for allowing the engagement pin or protrusion to pass from the fore/aft guide section to the first section of level change guide, preventing the engagement pin or protrusion from passing from the second section of the level change guide to the fore/aft guide section; in such case, possibly:
a) the no return system substantially closes or however blocks the fore/aft guide section, when the engagement pin or protrusion does not act on it; and/or
b) the insertion opening is arranged near or at the no return system and near or at the intersection of the fore/aft guide section with one of the two sections of the level change guide.

In a particular embodiment, each no return system can comprise an element chosen from the following group: a door hinged or however pivotable, a pawl or tooth or lever hinged or however pivotable, a ball, a spring or another preload system.

In a particular embodiment, the engagement pin or protrusion he is axially slidable.

In a particular embodiment, the depth of the fore/aft guide section, and/or of the first and/or second section of the level change guide varies so as to form a step and allow the engagement pin or protrusion to slide along the adjustment guide in a predetermined direction of travel, but not in the opposite direction of travel.

In a second aspect of the present invention, this object is achieved with a vehicle having the features according to claim 12.

In a particular embodiment of the vehicle according to the invention, the fore/aft guide section of an adjustment guide has an inclination, relative to a horizontal line, smaller than that of the first or second section of the level change guide.

In a particular embodiment of the vehicle according to the invention, the first and/or second section of the level change guide are inclined relative to the vertical.

In a particular embodiment of the vehicle according to the invention, the first and/or second sections of level change guide are arranged below the fore/aft guide section and/or below insertion opening.

In a particular embodiment of the vehicle according to the invention, the no return system is arranged so as to be able to close the first or second section or level change guide at the point where the first or second section ends up in the fore/aft guide section.

In a particular embodiment, the vehicle according to the invention is provided with the aforesaid lifting system the adjustment guide of which is provided with an insertion opening through which engagement pin or protrusion can pass, so as to engage or being removed from the adjustment guide, and the insertion opening of an adjustment guide faces is oriented upwards, so as to allow the engagement pin or protrusion be inserted with a movement from the top downwards.

In a particular embodiment of the vehicle according to the invention, the fore/aft guide section of an adjustment guide extends in the direction of travel of the vehicle.

The advantages achievable with the present invention will appear clearer, to the person skilled in the art, from the following detailed description of some preferred but nonlimiting embodiments, given with reference to the following schematic figures.

### List of Figures

Figure 1 shows a perspective view of the rear part of a vehicle, the inner luggage compartment of which, shown open, is provided with a lifting system of a displaceable luggage shelf, according to a first particular embodiment of the present invention;
Figure 2 shows a front view of one of the side frames of the lifting system of Figure 1;
Figure 2A shows a detail of the frame of Figure 2, sectioned according to the section plan A-A;
Figures 3A and 3B show the detail of a no return system of the lifting system of Figure 1, in two different instants of operation;
Figure 4 shows, as an explaining example, a guide having three sections, two of which lying on opposite sides relative to the third section;
Figure 5 shows a front view of one of the side frames of a lifting system for a displaceable luggage shelf, according to a second particular embodiment of the invention;
Figures 6, 7, 8 show side views of the frame of Figure 5, sectioned respectively according to the section surfaces B-B, C-C, D-D;
Figure 9 shows a front view of one of the side frames of a lifting system of a displaceable luggage shelf according to a third embodiment of the invention;
Figure 10 shows a detail, partially sectioned, of a side frame of a lifting system for a displaceable luggage shelf, according to a fourth embodiment of the invention.

### Detailed description

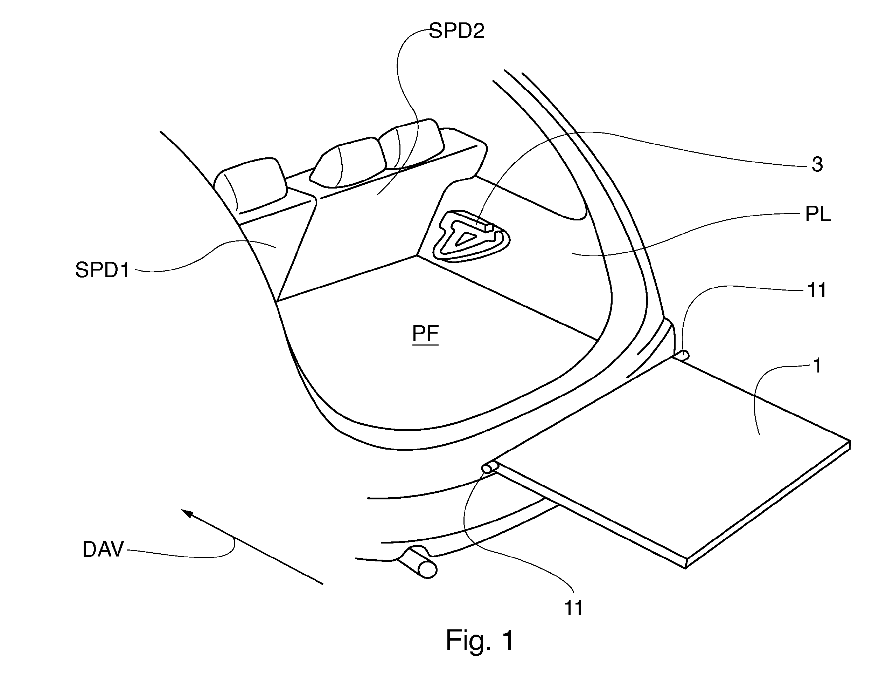

In present the description, when it is not stated otherwise the terms "front" and "rear" are referred to the direction of travel of the vehicle (arrow DAV in Figure 1) or however to the front and rear parts of the same car. The expression "displaceable luggage shelf" is not to be understood as restricted to a planar support in the geometric sense of the term, but it more in general terms embraces also load supports having even only roughly planar, or non-planar, variously wavy, ribbed and even further.

Figure 1 shows the rear part of a vehicle, with the inner luggage compartment shown opened. Such luggage compartment, arranged behind the rear seats of the car - the split backrests of which, SPD1 and SPD2, are visible in Figure 1 - is delimited by a fixed floor PF, formed by a portion of the bodywork floor, and by two sidewalls PL. Above the fixed floor PF a displaceable luggage shelf 1 can be mounted, fixing it to the vehicle so as to allow it be reversibly removed from the vehicle, as described deeper later on.

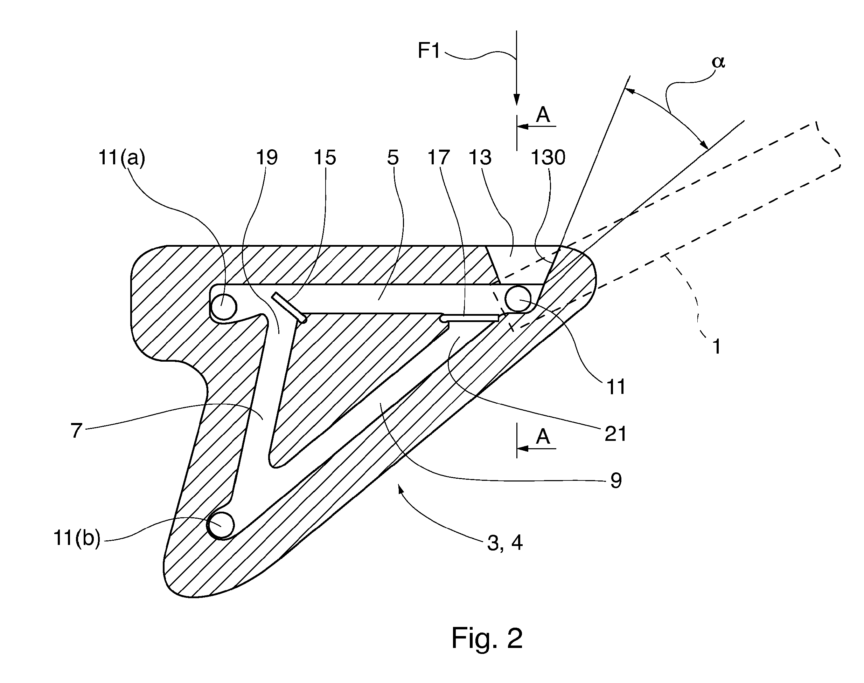

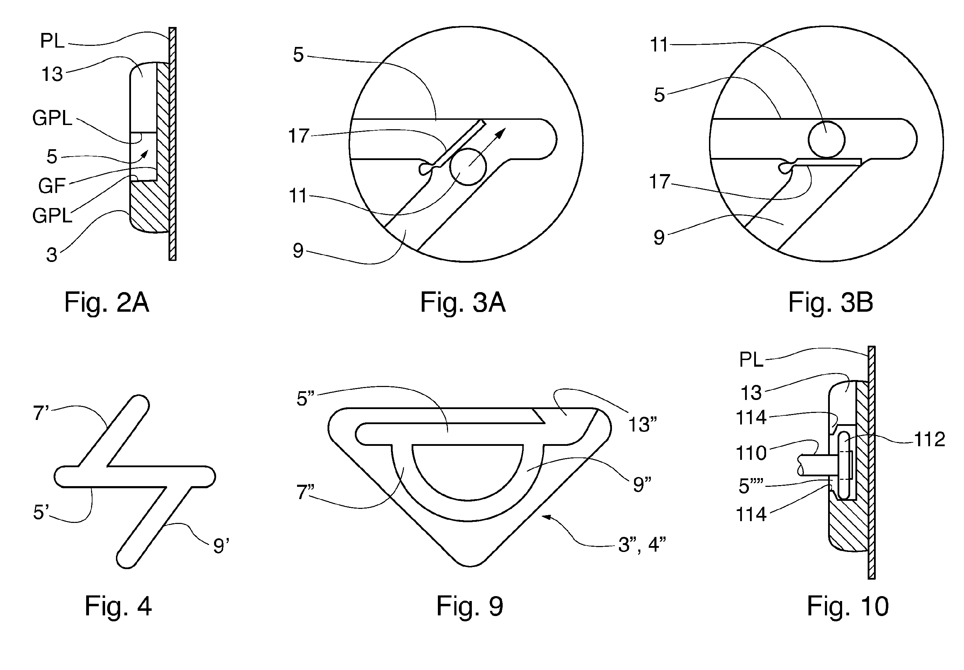

On each sidewall PL a frame 3 is present, made for instance as an injection moulding plastic component and forming, on its side facing the luggage compartment, an adjustment guide 4 comprising in its turn three guide sections: sliding section along the fore/aft direction 5 ("fore/aft guide section"), and two sections of level change 7 and 9 respectively. In the present preferred embodiment, each of the guide sections 5, 7, 9 is made like a groove forming a bottom GF and two sidewalls GPL (Figure 2A).

On the front part of its side flanks, the displaceable luggage shelf 1 is provided with two sliding pins - or however two sliding protrusions 11- arranged for engaging the three guide sections 5, 7, 9 and sliding along them.

To this purpose, the two frames are fixed - for instance with screws, rivets or interlocks-on the respective sidewalls PL one facing the other, at the same height and horizontal position relative to the direction of travel of the vehicle, allowing at least the front edge of the displaceable luggage shelf 1 be kept horizontal during its displacements along the guides 4.

According to the invention, the level change sections 7 and 9 join and intersect the fore/aft section 5, so as to form, together with the fore/aft section 5, a path closed on itself along which the sliding hinges -or however the sliding protrusions- 11 of the luggage shelf 1 can travel, by sliding along the guide sections 5, 7. 9.

Preferably the two level change sections 7, 9 are arranged by the same side relative to the fore/aft section 5 (for clarity sake, Figure 4 shows the example of a sliding guide wherein two sections 7 ' and 9 ' are arranged by opposite sides relative to the section 5 ', and sections 5 ', 7 ', 9 ' form an open path); furthermore the level change sections 7 and 9 join one another at a point different from the point where they join the fore/aft section 5.

Advantageously each adjustment guide 4 forms an insertion opening 13 (Figures 2, 2A) allowing the passage of the sliding pins or protrusions 11, thereby allowing the displaceable luggage shelf 1 be reversibly fixed to the guides 4 -and consequently to the sidewalls of the inner luggage compartment- and reversibly removed from them. In the preferred embodiment of Figures 2, 2A the insertion opening 13 is made on one of the sidewalls GPL of the fore/aft guide section 5 (Figure 2A) and has increasing width upwards, like a funnel, so as to allow the engagement pin or protrusion 11 be inserted easier.

In the present preferred embodiment, when the frame 3 is mounted on the vehicle the fore/aft section 5 of each guide 4 runs substantially horizontally, while the two level change sections 7, 9 are inclined relative to the vertical; still in the shown preferred embodiment, the level change section 7, which on the vehicle is arranged in a more advanced position relative to the section 9, has a steeper inclination than the section 9. However in other embodiments not shown the sections 5, 7, 9 can have also different inclinations and shapes: for instance the fore level change section 7 can have a greater inclination than the rear level change section 9; the fore/aft section 5 can be also not horizontal, the level change sections 7, 9 can be vertical or partly horizontal; furthermore in general the sections 5, 7, 9 can be also not straight, and form curved or angular paths in various ways.

Returning to the embodiment of Figures 1, 2, 2A, 3A, 3B, wherein the level change sections 7, 9, when mounted on a vehicle, are arranged below the fore/aft section 5, advantageously no return systems 15, 17 are arranged by the upper mouths of the level change sections 7, 9; in this embodiment, each no return system is made like a pawl, lever or however like an element hinged to the frame 3 and constantly pressed by a preload spring -or by another equivalent preload system- towards a suitable "normal" position; in particular the no return system 15, which when mounted on the vehicle is located at a more advanced position than the element 17, is constantly pushed towards a "normally open" position by its preload spring, that is so as to leave the upper mouth 19 of the guide section 7 open, while the no return system 17, which when mounted on the vehicle is located behind the element 15, is constantly pushed towards a "normally closed" position by its preload spring, that is so as to close the upper mouth 21 of the guide section 9.

Advantageously the insertion opening 13 is arranged at or near the no return system 17 and the point where the fore/aft section 5 intersects the level change feature 9.

The operation is now described, of the lifting system of a displaceable luggage shelf just described.

Starting from a condition in which it has been removed from the vehicle, the displaceable luggage shelf 1 can reinserted in the inner luggage compartment keeping it in an about horizontal position, and inserting each of the two sliding hinges or protrusions 11 in the respective opening 13 of the adjustment guides 4, with a vertical movement (arrow F1 in Figure 2). The displaceable luggage shelf 1 is then pushed forward horizontally, towards the fore part of the car, making the two sliding hinges or protrusions 11 to travel along the fore/aft section 5. Thanks to its preload spring, the no return system 17 is closed (Figure 3B) and parallel to the guide section 5, preventing the pin or protrusion 11 of falling into the guide section 9, and on the contrary making the pin or protrusion 11 slide easier along the fore/aft section 5. Moving towards the fore part of the vehicle, each pin or protrusion 11 pulls down its respective no return system 15, overcoming the resistance of the no return spring which keeps the element 15 in a normally opened position. The no return system 15 in down position closes the mouth 19 of the guide section 7, allowing its respective pin or protrusion 11 to go beyond it and continue the travel along the fore/aft section 5 of the guide 4; to this purpose, the no return system 15 in down position rests on a suitable stop made on the body of frame 3. When each pin or protrusion 11 has reached the bottom of the blind branch that section 5 forms at its fore end, it stops in a stable configuration; the displaceable luggage shelf 1 can therefore be arranged in a first horizontal position reaching its higher loading attitude, in which it can be loaded even with heavy objects.

For bringing the luggage shelf 1 in its lower loading position, the user catches the rear edge of the displaceable luggage shelf 1 and it pulls it rearwards, that is in the direction opposite to the direction of travel of the vehicle; the fore no return system 15, which is kept in the normally open position -that is, raised- by its preload spring, closes the fore/aft section 5, opening at the same time the mouth 19 of the level change section 7. Therefore, each pin or protrusion 11 of the luggage shelf 1 necessarily falls in the fore level change section 7, to the bottom of which the displaceable luggage shelf 1 can be arranged in a second horizontal position, and reaches its lower loading attitude, wherein it rests directly on the fixed floor PF of the luggage compartment, and it can be loaded again with heavy objects too.

For removing again the luggage shelf 1 from the inner luggage compartment, or however from the adjustment guides 4, the user grabs again the rear edge of the displaceable luggage shelf 1 and it pulls rearwards, making each pin or protrusion 11 of the luggage shelf 1 to travel up along the slanted section 9 of guides 4. When each pin or protrusion 11 reaches its respective rear no return system 17, which is normally closed, opens it overcoming the resistance of its preload spring (Figure 3A); the pin or protrusion 11 can thereby reach again the rear end of section 5, and the opening 13, from which the pin or protrusion 11 can be extracted and removed from guides 4. Still thanks to its preload spring, each no return system 17 closes again the upper mouth of the guide section 9 as soon as the pin or protrusion 11 has passed over it, preventing the front edge of the luggage shelf 1 from falling back along the guide sections 9.

The no return system 17, being near the insertion opening 13 and at the junction point of the fore/aft guide section 5 with the second level change guide section 9, prevents the engagement pins or protrusions 11 from falling accidentally in the guide section 9 instead of sliding along the guide section 5, when they are inserted through the opening 13. On the other hand the arrangement of the no return system 17 near the insertion opening 13 allows the displaceable luggage shelf 1 be removed quickly and easily, since the engagement pins or protrusions 11, after having travelled along the guide section 9, happen to be immediately by, or however close to, the opening 13.

With regard to this it has to be noted that the upwardly tapered walls of the insertion opening13, if they are enough opened, just deflect the trajectory of an engagement pin or protrusion 11 which covered the slanted guide section 9, but substantially do not hinder the movement of such pin or protrusion 11. Therefore the opening 13 is provided with a wall 130 having an inclination α, relative to the slanted guide section 9 closest to it, preferably comprised between about 0° and 90°, more preferably between 0° and 50°, still more preferably between about 0° and 30° or between 0° and 15°.

This makes the removal of the displaceable luggage shelf 1 from guides 4 less heavy.

The presence of two no return systems 15, 17, and of two different guide sections 7, 9, forces the engagement pins or protrusions 11 to move between the insertion opening 13, and the upper -reference 11 (a) in Figure 2- and lower loading position -reference 11 (b) in Figure 2- following a forced path with a forced direction of travel, without branch points where the user should direct the engagement pins or protrusions 11 in the desired direction and guide section, with complicated and heavy maneuvers.

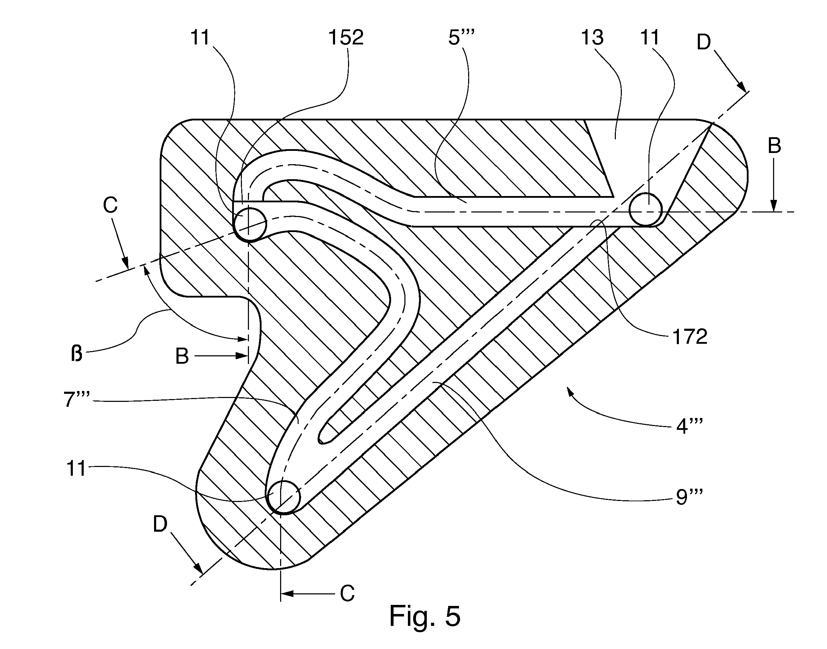

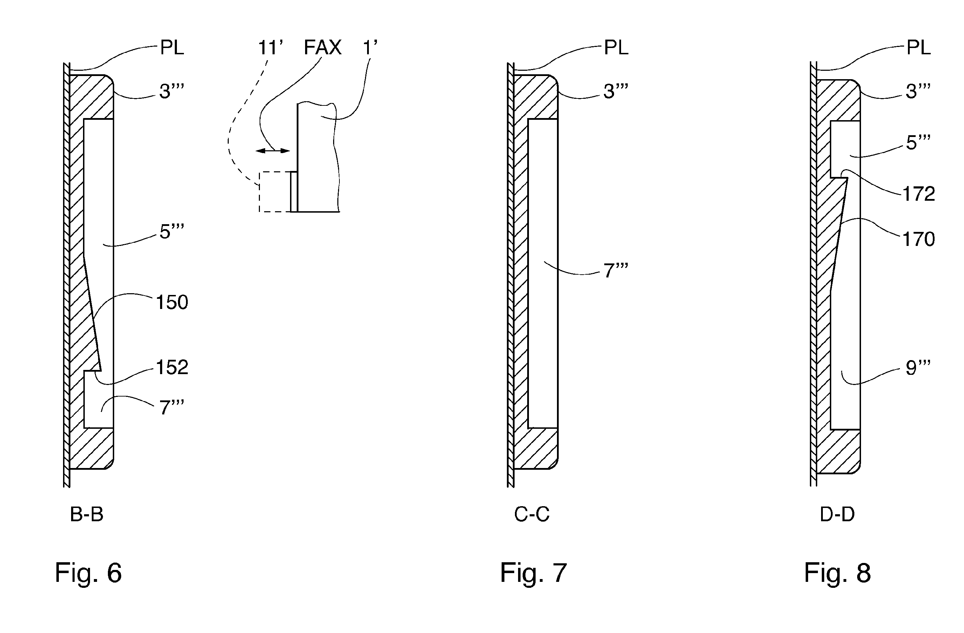

Thanks to the present invention a simple, strong, cheap and handy system can be provided, to be used for raising and lowering a displaceable luggage shelf 1 in the inner luggage compartment of a vehicle such as a car or van, with no need of complex lever mechanisms, but allowing the displaceable luggage shelf be reversibly removed from the rest of the vehicle, and reinserted in the vehicle; with regard to this it has to be noted that a lever lifting system entails greater risks of hurting a user -for instance his fingers- or a carried animal, than a sliding guide system. Moreover, thanks to the teachings previously set forth, the manual handling of the luggage shelf can be made easy and not heavy, eliminating in particular the risks of interferences of the displaceable luggage shelf 1, 1 ' along the guides 4, 4 "'. Figures 5-8 are relative to a second embodiment of a lifting system according to the invention. In such embodiment, each sliding pin or protrusion 11 ' can slide axially, and is constantly pressed towards its position of maximum axial extension in the axial direction (see arrow FAX in Figure 6) by a suitable preload spring.

Moreover the depth of the fore/aft guide section 5", in its portion immediately before its intersection with the section of the level change guide 7", diminishes progressively forming a first ramp, or inclined plane, 150 (Figure 6). Such ramp 150 ends with the step 152 at the intersection point with the guide section 7"'.

Similarly the depth of the section of the level change guide 9"', in its portion immediately before its intersection with the fore/aft guide section 5"', diminishes progressively forming a second ramp, or inclined plane, 170 (Figure 8). Such ramp 170 ends with the step 172, at the intersection point with the guide section 5"'.

The operation of such lifting system is the following.

When the engagement pin or protrusion 11 ' moves along the guide section 5"' from the opening 13 towards the step 152, the first ramp 150 causes the pin or protrusion 11" to retract axially. After having passed over the step 152, the pin or protrusion 11' is extended axially and, due to the step 152, cannot travel backwards along the guide section 5"'. In order to lower the luggage shelf 1' to its lower operating loading position, the user only needs to pull the shelf 1' backwards (that is in the direction opposite to the vehicle direction of travel), so as to make the engagement pins or protrusions 11 ' slide along the guide section 7"', driven by the weight of the displaceable luggage shelf 1'. The particular inclinations of the guide sections 5'" and 7'" near their intersection cause the pins 1' to enter the guide section 7'" necessarily and without interferences, by pulling backwards the displaceable shelf 1'.

For raising again the luggage shelf 1 ' from its lower operating loading position to its upper loading position, the user needs again to pull the shelf 1' backwards, so as to cause the pins or protrusions 1' to move up along the section of level change guide 9"'. So doing, the second ramp 170 causes the pin or protrusion 11' to retract axially. After having passed the step 172, the pin or protrusion 11' extends axially again, with no possibility of falling again in the guide section 9"'. In the embodiment of Figures 5-8, the no return systems are made up of the ramps 150, 170, the steps 152, 172 and the axially sliding pins or protrusions 11'.

Advantageously the fore section of the level change guide 7"' and the fore/aft guide section 5'" intersect forming an acute angle β, preferably having the smallest possible width; to this purpose, the fore section of the level change guide 7"' and the fore/aft guide section 5"', near their intersection points, can form suitably curved paths, as shown for instance in Figure 5.

Advantageously the fore section of the level change guide 7"' and the fore/aft guide section 5"' are shaped in such a way that each engagement pin or protrusion 11' passes from the fore/aft guide section 5"' to the fore section of the level change guide 7"' by dropping, or however the portion of the guide section 5"' immediately before the intersection with the guide section 7"' slopes down, so that the weight of the displaceable luggage shelf 1' helps the sliding of each pin 1' towards the guide section 7"'.

Advantageously the fore section of the level change guide 7"' and the fore/aft guide section 5"', near their intersection point, form a substantially U-shaped or V-shaped path, so as to invert the displacement component of each engagement pin or protrusion 11', which component is parallel to the direction of travel of the vehicle.

These measures help in avoiding that the engagement pins or protrusions 11' interfere and get blocked while moving along the guide 4"'.

The preferred embodiments previously described are susceptible of various modifications and variations without departing from the scope of the present invention. In particular the closed path formed by the adjustment guides 4, and along which each engagement pin or protrusion 11 can slide, can have not only triangular shape -as formed by the guide sections 5, 7, 9 of Figure 2- but for example also square, rectangular, trapezoidal, polygonal, semicircular or half-moon like (Figure 9), circular, elliptic, oval, variously curved shape. Each engagement protrusion can comprise a pin 110 and a wheel 112 rotatably mounted on the pin (Figure 10). In that case, the sidewalls GPL of the guide sections 5, 7, 9 can form raised edges 114 that prevent the wheel 112 from coming out of the different sections of guide 4. The lifting system of a displaceable luggage shelf according to the invention can be applied not only to motor vehicle (automobiles) but clearly also to other kinds of vehicles, such as vans, camions, trailers, campers, roulottes and other vehicles for transporting persons and things, as well as other transport means such as boats and aircrafts. The examples and lists of possible variations of the present application are to be understood as non-exhaustive.

## Claims

1. System for lifting a displaceable luggage shelf for a vehicle, comprising:
- a displaceable luggage shelf (1) provided with an engagement pin or protrusion (11) protruding from a flank of the displaceable luggage shelf (1);
- an adjustment guide (4) in its turn comprising a fore/aft guide section (5), and a first and a second section of a level change guide (7, 9);
wherein the first and second section of the level change guide (7, 9) intersect the fore/aft guide section (5), so as to form a path closed on itself along which the engagement pin or protrusion (11) can travel, engaging the displaceable luggage shelf (1) with the adjustment guide (4).

2. System according to claim 1, wherein the first and second section of the level change guide (7, 9) join one with another.

3. System according to claim 1 or 2, wherein the first and second section of the level change guide (7, 9) join one with another at a point different from the one in which they intersect the fore/aft guide section (5).

4. System according to one or more preceding claims, wherein the first and second section of the level change guide (7, 9) are arranged by the same side relative to the fore/aft guide section (5).

5. System according to one or more preceding claims, wherein the adjustment guide (4) is provided with an insertion opening(13) through which the engagement pin or protrusion (11) can pass, so as to engage or be removed from the adjustment guide (4).

6. System according to one or more preceding claims, comprising a no return system (15, 17) arranged for allowing the engagement pin or protrusion (11) to slide in a direction along one out of the fore/aft guide section (5), and the first and second section of the level change guide (7, 9), preventing it from sliding in the opposite direction.

7. System according to claim 6, wherein the no return system (17) is arranged for allowing the engagement pin or protrusion (11) to pass from the second section of the level change guide (9) to the fore/aft guide section (5), preventing the engagement pin or protrusion (11) from passing from the fore/aft guide section (5) to the second section of the level change guide (9).

8. System according to claim 7, wherein the no return system (17) substantially closes or however blocks the second section of the level change guide (9), when the engagement pin or protrusion (11) does not act on the no return system (17).

9. System according to one or more claims from 6 to 8, wherein the no return system (15) is arranged for allowing the engagement pin or protrusion (11) to pass from the fore/aft guide section (5) to the first section of the level change guide (7), preventing the engagement pin or protrusion (11) from passing from the second section of level change guide (9) to the fore/aft guide section (5).

10. System according to at least claims 7 and 9, comprising two no return systems (15, 17).

11. System according to one or more of the preceding claims, wherein the path closed on itself formed by the first and second section of the level change guide (7, 9) and by the fore/aft guide section (5), and along which the engagement pin or protrusion (11) can travel, has a shape chosen from the following group: triangular, square, rectangular, trapezoidal, polygonal, semicircular or half-moon like, circular, elliptic, oval, variously curved.

12. Vehicle comprising a system for lifting a luggage shelf (1) having the features according to one or more of the preceding claims.

13. Vehicle according to claim 12, comprising an inner luggage compartment which in its turn comprises a floor (PF) fixed relative to the vehicle bodywork and two sidewalls (PL) extending vertically, wherein the adjustment guide (4) extends vertically on one of the sidewalls (PL), so as to allow the height be adjusted, of the displaceable luggage shelf (1) in loading attitude and inserted in the inner luggage compartment.

14. Vehicle according to claim 13, comprising two adjustment guides (4) each of them arranged on one of the sidewalls (PL) of the gap luggage compartment, one of the guides (4) facing the other one.

15. Vehicle according to one or more claims from 12 to 14, wherein the displaceable luggage shelf (1) can reversibly pass from a first loading attitude in a higher position, to a second loading attitude in a lower position, making its engagement pin or protrusion (11) to slide along the first (7) and second section of the level change guide (9).
